Europäisches Patentamt

European Patent Office

Office européen des brevets

(11) Veröffentlichungsnummer : **0 024 335**
**B1**

(12) **EUROPÄISCHE PATENTSCHRIFT**

(45) Veröffentlichungstag der Patentschrift :
22.06.83

(51) Int. Cl.³ : **A 61 C 13/20**

(21) Anmeldenummer : **80104670.7**

(22) Anmeldetag : **07.08.80**

(54) Vorrichtung zur Durchführung von Wärmearbeiten in der zahnärztlichen Praxis.

(30) Priorität : **16.08.79 DE 2933269**

(43) Veröffentlichungstag der Anmeldung :
**04.03.81 Patentblatt 81/09**

(45) Bekanntmachung des Hinweises auf die Patenterteilung : **22.06.83 Patentblatt 83/25**

(84) Benannte Vertragsstaaten :
**FR GB IT**

(56) Entgegenhaltungen :
**DE A 1 516 450**
**DE A 2 506 494**
**DE A 2 744 755**
**US A 3 445 662**

(73) Patentinhaber : **SIEMENS AKTIENGESELLSCHAFT**
**Berlin und München Wittelsbacherplatz 2**
**D-8000 München 2 (DE)**

(72) Erfinder : **Hohmann, Eugen**
**Am Leimenberg 32**
**D-6140 Bensheim (DE)**

## Vorrichtung zur Durchführung von Wärmearbeiten in der zahnärztlichen Praxis

Zur Durchführung von Wärmearbeiten in der zahnärztlichen Praxis, wie z. B. zum Erwärmen von Wachs oder speziellen Abdruckmaterialien, zum Anwärmen eines Instruments oder Spiegels, sind verschiedene Heizvorrichtungen bekannt, u. a. elektrische (DE-A-2 506 494) und optische (DE-U-1 980 838) Brenner. Erstere bestehen im wesentlichen aus einer oberhalb eines Metallreflektors frei angeordneten Heizwendel. Eine solche offene Anordnung führt zwangsläufig zu einer Verschmutzung der Heizwendel und des darunter befindlichen Reflektors, was insbesondere bei der Durchführung von Wärmearbeiten an verflüssigbaren Materialien, wie Wachs, unangenehm ist, wo es leicht zu einem Abtropfen von flüssigem Material auf die Heizwendel kommen kann, das dann unter unangenehmer Geruchsentwicklung an der Heizwendel verbrennt. Ein weiterer Nachteil ist darin zu sehen, daß nach dem Abschalten der Heizvorrichtung die Heizwendel noch relativ lange heiß bleibt, wodurch Verbrennungen bei unbeabsichtigtem Berühren nicht auszuschließen sind.

Insbesondere der zuletzt genannte Punkt trifft zwar bei Vorrichtungen mit einem optischen Brenner nicht zu; die aus dem DE-U-19 80 838 bekannte Vorrichtung weist jedoch andere Nachteile auf. So ist infolge der dort vorgeschlagenen Anordnung von Lampe und Reflektor und der damit festgelegten Austrittsrichtung der Wärmestrahlen der Arbeitseinsatz auf solche Gegenstände beschränkt, die frei im Raum im äußeren Brennpunkt des elliptischen Reflektors gehalten werden können. Das Anmischen von z. B. pulvrigen oder flüssigen Komponenten unter Wärme ist damit nicht bzw. nur sehr umständlich unter Zuhilfenahme von zusätzlichen speziellen Behältnissen möglich.

Aufgabe der Erfindung ist es, eine demgegenüber verbesserte Vorrichtung zu schaffen, insbesondere mit dem Ziel, Wärmearbeiten sowohl mit frei im Raum zu halternden Objekten als auch mit solchen Materialien durchführen zu können, die einer Arbeitsunterlage bedürfen.

Das gestellte Ziel wird gemäß der Erfindung dadurch erreicht, daß das optische Brennsystem so angeordnet ist, daß eine senkrechte Wärmestrahlung entsteht und die Lage des äußeren Brennpunkts derart verschoben werden kann, daß mehrere Arbeitspunkte gebildet werden können, in denen eine Bündelung der Strahlen gegeben ist, und daß in einem dem Reflektor benachbarten Arbeitspunkt bzw. in dessen unmittelbarem Bereich eine zumindest die Infrarotstrahlung durchlassende, wärmebeständige, als Arbeitsfläche benutzbare Abdeckung angeordnet ist.

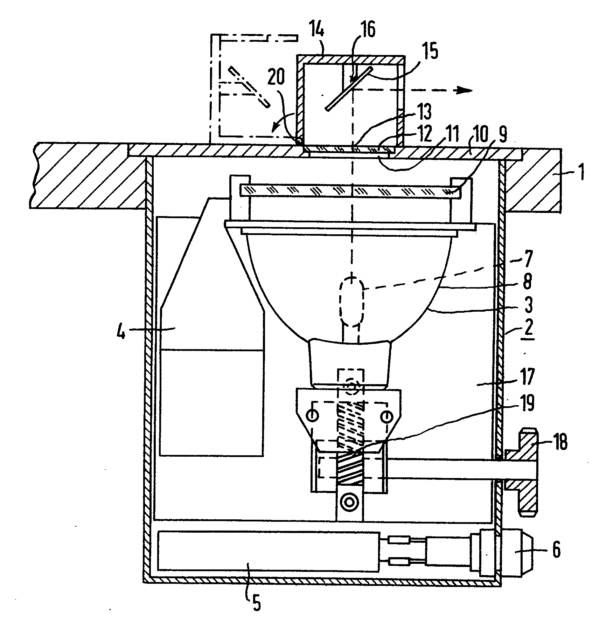

Vorteilhafte Ausgestaltungen und Weiterbildungen der Erfindung sind in den abhängigen Ansprüchen enthalten. Ein Ausführungsbeispiel der Erfindung wird nachfolgend anhand der Zeichnung näher erläutert.

Die Zeichnung zeigt in einer Schnittdarstellung den Aufbau der erfindungsgemäßen Vorrichtung.

Die Vorrichtung ist in einer mit 1 bezeichneten Tischplatte, die Teil eines nicht näher dargestellten zahnärztlichen Gerätes ist, versenkt angeordnet und enthält ein Gehäuse 2, in dem ein Strahler 3, ein Lüfter 4 sowie eine elektrische Versorgung 5 mit einem Ein- und Ausschalter 6 angeordnet sind. Der Strahler 3 besteht aus einer Halogenlampe 7 mit einem gebündeltes Licht liefernden Infrarot-Spiegel 8, der innen einen Goldüberzug aufweist. Der Überzug ist so beschaffen, daß er die gesamte Lichtenergie einschließlich des IR-Anteiles reflektiert. Zur Fokussierung des von der Lampe ausgehenden Lichtes kann auch eine geeignete Linse oder ein Linsensystem vorgesehen werden. Oberhalb des Strahlers 3 ist ein Infrarotfilter 9 angeordnet, welches Strahlen mit einer Wellenlänge $\geq$ 695 nm transmittiert. Die obere Abdeckung 10 des Gehäuses 2 enthält ein Fenster 11, in dem ein wärmebeständiges Quarzglas 12 eingesetzt ist.

Lampe und Infrarot-Spiegel sind so ausgebildet und angeordnet, daß in einem Arbeitspunkt (Fokus) außerhalb des Strahlers eine Strahlungsbündelung (Fokussierung) gegeben ist. In diesem Arbeitspunkt liegt demnach die höchste Temperatur. Der Strahler 3 ist im Gehäuse 2 so angeordnet, daß dieser Arbeitspunkt normalerweise bei 13 in Ebene des Quarzglases 12 liegt. Oberhalb des Fensters 11 ist an einer Halterung 14 ein Umlenkspiegel 15 befestigt, mit dem die von der Lampe 7 ausgehende Strahlung in Pfeilrichtung umgelenkt werden kann, so daß Wärmearbeiten auch seitlich des Austrittsfensters 11 durchgeführt werden können. Der Arbeitspunkt des Infrarot-Spiegels 8 ist in diesem Fall bis zum Punkt 16 im unmittelbaren Bereich des Umlenkspiegels 15 zu verschieben, was durch eine entsprechende Verstellung des Strahlers 3 bewerkstelligt werden kann.

Für eine solche Verstellung ist der Strahler 3 zusammen mit dem Filter 9 und dem Lüfter 4, der zur besseren Abfuhr von im Gehäuse 2 entstehender Wärme dient, auf einer Montageplatte 17 befestigt, die über ein Handrad 18 und ein Schneckengetriebe 19 um etwa 10 bis 15 mm in die Höhe verstellt werden kann. Der Arbeitspunkt kann so von einem ersten Fokus bei 13 bis zu einem zweiten Fokus bei 16, der zweckmäßigerweise etwas außerhalb der Spiegelebene liegt, verstellt werden.

Die Halterung 14 ist mittels einer Achse 20 schwenkbar gehaltert und kann so, wie strichpunktiert dargestellt, aus dem Strahlungsbereich weggeschwenkt werden. Wärmearbeiten können also auch direkt oberhalb des Fensters 11 durchgeführt werden. Bei stark tropfenden Materialien, wie Wachs od. dgl., ist es jedoch zweckmäßig, die Halterung 14 mit dem Spiegel 15 in der durchgezogenen Stellung zu belassen, um so zu verhindern, daß abtropfendes Wachs od. dgl. das Quarzglas 12 belegen und so den Durchgang der Strahlung reduzieren kann. Denkbar ist es auch, auf die Abdeckung 10 bzw. das Quarzglas 12 eine IR-durchlässige Folie aufzulegen, die bei einem Belag durch abtropfendes Material gegen eine neue ausgewechselt werden kann.

Die Verstellung des Arbeitspunktes (Fokus) kann auch zur Intensitätsregelung genutzt werden. In diesem Falle ist es vorteilhaft, die Arbeitshöhe durch eine geeignete Hilfsvorrichtung, z. B. durch einen offenen, ringförmigen Bügel festzulegen; durch Verändern des Arbeitspunktes ändert sich dann in Ebene des Bügels die Intensität der Strahlung.

Durch die Anordnung des Infrarotfilters 9 dergestalt, daß das Filter Strahlung im Infrarotbereich voll, darüberhinaus aber noch einen, vorzugsweise geringen, Anteil an sichtbarem Licht durchläßt, vorzugsweise im Bereich von 690 bis 700 nm, wird der eingeschaltete Zustand der Heizvorrichtung am Quarzglas 12 optisch angezeigt.

Der versenkte Einbau der gesamten Vorrichtung bietet eine saubere Handhabung. Nachdem die Arbeitsfläche des Tisches 1 in Ebene der Abdeckung 10 liegt, können spezielle Wärmearbeiten direkt auf der Abdeckung durchgeführt werden. Der Einbau ist jedoch nicht auf die dargestellte Ausführungsform beschränkt; denkbar ist vielmehr auch ein waagrechter Einbau der Vorrichtung, z. B. im Gehäuse eines Instrumententisches, wobei die Vorrichtung auch wiederum versenkt im Tisch angeordnet sein kann. Der Umlenkspiegel sorgt dann dafür, daß der Arbeitspunkt in Ebene der Tischfläche oder darüber zu liegen kommt.

### Ansprüche

1. Vorrichtung zur Durchführung von Wärmearbeiten in der zahnärztlichen Praxis, unter Verwendung eines optischen Brennsystems (7, 8) mit einem in einem Gehäuse (2) angeordneten, einen hohen Anteil an Infrarotstrahlung liefernden Strahler (3) und einem Reflektor (8), der in einem außerhalb desselben liegenden Brennpunkt eine Bündelung (Fokussierung) der Strahlen bewirkt, dadurch gekennzeichnet, daß das optische Brennsystem (7, 8) so angeordnet ist, daß eine senkrechte Wärmestrahlung entsteht und die Lage des äußeren Brennpunkts derart verschoben werden kann, daß mehrere Arbeitspunkte (13, 16) gebildet werden können, in denen eine Bündelung der Strahlen gegeben ist, und daß in einem dem Reflektor (8) benachbarten Arbeitspunkt (13) bzw. in dessen unmittelbarem Bereich eine zumindest die Infrarotstrahlung durchlassende, wärmebeständige, als Arbeitsfläche benutzbare Abdeckung (12) angeordnet ist.

2. Vorrichtung nach Anspruch 1, dadurch gekennzeichnet, daß der Strahler (3) verstellbar in einem Gehäuse (2) gehaltert ist, derart, daß in einer ersten Stellung der Arbeitspunkt (13) in Ebene der Abdeckung (12) liegt und in einer zweiten Stellung der Arbeitspunkt (Punkt 16) sich im freien Raum außerhalb der Abdeckung (12) und des Gehäuses (2) befindet.

3. Vorrichtung nach Anspruch 2, dadurch gekennzeichnet, daß im oder im unmittelbaren Bereich des Arbeitspunktes (16) der zweiten Stellung ein Umlenkspiegel (15) angeordnet ist und der Umlenkspiegel (15) in einer verstellbaren Halterung (14) gehalten ist, mit der der Umlenkspiegel (15) aus dem Strahlungsbereich des Strahlers (3) gebracht werden kann.

4. Vorrichtung nach einem der Ansprüche 1 bis 3, dadurch gekennzeichnet, daß als Abdeckung (12) ein Quarzglas vorgesehen ist und zwischen der Abdeckung (12) und dem Strahler (3) ein Filter (9) angeordnet ist, welches Strahlung im Infrarotbereich und geringfügig darunter, vorzugsweise oberhalb 690 nm, transmittiert.

5. Vorrichtung nach einem der Ansprüche 1 bis 4, dadurch gekennzeichnet, daß auf der Abdeckung (12) eine Infrarot-Strahlung durchlassende Folie auswechselbar angeordnet ist.

6. Vorrichtung nach einem der Ansprüche 1 bis 5, dadurch gekennzeichnet, daß sie in einem Gerät (1) mit tischartiger Arbeitsplatte (10) derart eingebaut ist, daß Abdeckung (12) und Arbeitsplatte (10) in einer Ebene liegen.

7. Vorrichtung nach einem der Ansprüche 1 bis 6, dadurch gekennzeichnet, daß in das Gehäuse (2), vorzugsweise zwischen Filter (9) und Strahler (3), die Blasöffnung eines Lüfters (4) einmündet.

### Claims

1. A device for the implementation of heat processes in dentistry practice, employing an optical focal system (7, 8) comprising a radiator (3) which is arranged in a housing (2) and supplies a high proportion of infra-red radiation, a reflector (8) to focus the beam at a focal point located outside of the radiator, characterised in that the optical focal system (7, 8) is arranged in such manner as to produce a perpendicular heat radiation, and the position of the external focal point can be displaced in such manner as to enable the formation of a plurality of operating points (13, 16) at which the beams are focussed, and that at an operating point (13) adjacent to the reflector (8), or in the direct vicinity of this point there is arranged a heat-resistance cover (12) which admits at least the infra-red radiation and which is used as an operating surface.

2. A device as claimed in Claim 1, characterised in that the radiator (3) is mounted in a housing (2) so as to be adjustable in such manner that in a first position the operating point (13) lies in the plane of the cover (12) and in a second position the operating point (point 16) is located in the free space outside the cover (12) and the housing (2).

3. A device as claimed in Claim 2, characterised in that, at the operating point (16), or in the direct vicinity thereof, in the second position there is arranged a deflecting mirror (15), and the deflecting mirror (15) is supported in an adjustable support (14) by which the deflecting mirror (15) can be moved out of the radiation range of the radiator (3).

4. A device as claimed in one of the Claims 1 to 3, characterised in that the cover (12) consists of quartz glass and between the cover (12) and the radiator (3) there is arranged a filter (9) which transmits radiation in and slightly below the infrared range preferably above 690 nm.

5. A device as claimed in one of the Claims 1 to 4, characterised in that a foil which admits infrared radiation is so arranged on the cover (12) as to be exchangeable.

6. A device as claimed in one of the Claims 1 to 5, characterised in that it is installed in apparatus (1) having a table-like operating plate (10) in such manner that the cover (12) and operating plate (10) lie in one plane.

7. A device as claimed in one of the Claims 1 to 6, characterised in that the blast opening of a ventilator (4) opens into the housing (2), preferably between the filter (9) and the radiator (3).

### Revendications

1. Dispositif pour l'exécution de travaux à la chaleur dans la pratique dentaire, avec mise en œuvre d'un système optique de chauffage (7, 8) comportant un élément rayonnant (3) disposé dans un boîtier (2) et fournissant une partie importante en rayonnement infrarouge, ainsi qu'un réflecteur (8) qui provoque en un foyer situé à l'extérieur de ce dernier, une concentration (focalisation) des rayons, caractérisé par le fait que le système optique de chauffage (7, 8) est disposé de telle façon qu'il se forme un rayonnement thermique vertical et que la position du foyer extérieur peut être déplacée de telle manière que plusieurs points de travail (13, 16) peuvent être formés, dans lesquels a lieu une concentration des rayons, et que dans un point de travail (13) voisin du réflecteur ou dans le voisinage immédiat de ce point de travail est disposé un couvercle (12) transparent au moins au rayonnement infrarouge, résistant à la chaleur et pouvant être utilisé comme surface de travail.

2. Dispositif selon la revendication 1, caractérisé par le fait que l'élément rayonnant (3) est monté de façon réglable dans un boîtier (2), de telle façon que dans une première position le point de travail (13) se situe dans le plan de couvercle (12) et, dans une seconde position, le point de travail (point 16) se situe dans l'espace libre, à l'extérieur du couvercle (12) du boîtier (2).

3. Dispositif selon la revendication 2, caractérisé par le fait que dans le point de travail (16) de la seconde position, ou dans le voisinage immédiat de ce point, est prévu un miroir de renvoi (15) et que le miroir de renvoi (15) est monté dans un support réglable (14) à l'aide duquel le miroir de renvoi (15) peut être éloigné de la plage de rayonnement de l'élément rayonnant (13).

4. Dispositif selon l'une des revendications 1 à 3, caractérisé par le fait que le couvercle (12) est constitué par un verre de quartz et qu'entre le couvercle (12) et l'élément rayonnant (3) est disposé un filtre (9) qui transmet un rayonnement dans la plage des infrarouges et deux en-dessous de celle-ci, de préférence au-delà de 690 nm.

5. Dispositif selon l'une des revendications 1 à 4, caractérisé par le fait que sur le couvercle (12) est disposée une feuille, remplaçable, laissant passer un rayonnement infrarouge.

6. Dispositif selon l'une des revendications 1 à 5, caractérisé par le fait qu'il est monté dans un appareil (1) à plateau de travail (10) en forme de table, de manière que le couvercle (12) et le plateau de travail (10) se situent dans un plan.

7. Dispositif selon l'une des revendications 1 à 6, caractérisé par le fait que dans le boîtier (2), de préférence entre le filtre (9) et l'élément rayonnant (3), débouche l'ouverture de soufflage d'un ventilateur (4).